# EUROPEAN PATENT APPLICATION

(11) **EP 3 836 050 A1**
(43) Date of publication of application: **16.06.2021**
(21) Application number: 19214389.9
(22) Date of filing: 09.12.2019
(51) Int. Cl.: G06Q 10/06, G06Q 10/08

(54) **ENTERPRISE RESOURCE PLANNING SYSTEM AND METHOD**

(71) Applicant: Bagheri, Alireza, London SW5 9SB (GB)
(72) Inventor: Bagheri, Alireza, London SW5 9SB (GB)
(74) Representative: Dennemeyer & Associates S.A.

(57) **Abstract**

An enterprise resource planning system. The system comprises an enterprise resource planning (ERP) server operable to implement an enterprise resource planning application configured to be able to process planned data that is input by one or more users via a respective user device of a plurality of user devices. The planned data relates to a plurality of events associated with delivery of a plurality of items within an item distribution network. The system comprises a plurality of marker generation devices. Each marker generation device is operable to generate a plurality of markers that are each associated with a respective item for tracking delivery of that item within the item distribution network. Each marker comprises respective identification data relating to one or more attributes of the item with which is it associated. The system comprises a data collection server operable to communicate with the ERP server via a network, and a plurality of marker readers located at respective item reading locations. The plurality of marker readers are each operable to read the identification data from the markers and send the identification data together with respective measured attribute data to the data collection server via the network. The ERP server is operable to receive actual event data. The actual event data comprises the identification data and respective measured attribute data generated by the plurality of marker readers. The ERP server is operable to generate analytic data for analysis based on the planned data and the actual event data.

## Description

The present disclosure relates to an Enterprise Resource Planning System and Method.

Many companies, such as those in the manufacturing, construction, pharmaceutical, or information technology sectors for example, use enterprise resource planning (ERP) software, for example, to help them manage and plan their activities. For example, Gantt Chart software is available such as "Project" by Microsoft® and "P6 Primavera" by Oracle®.

Companies that wish to use ERP techniques may typically have a dedicated group of people who monitor and report the status of the resources of the company, using the ERP software. These people may be employed with a particular department within the company, such as a project management office, and/or may be formed by appointing individuals or groups of people from different disciplines such as commercial disciplines, accounting disciplines, procurement disciplines, contract management disciplines, and the like.

A company may use ERP software for many reasons. For example, a company may use ERP software to help them plan allocation of human resources, and to help synchronise a company's existing contractual timelines and deadlines with their stakeholders and with the market. They may also use ERP software to help calculate cost and estimate a budget. ERP software is typically bought "off-the shelf' or developed and purchased bespoke. However, a very large amount of money gets spent for ERP software worldwide, which may also require dedicated staff to administer and manage it. Furthermore, much of the corporate effort for ERP is in managing internal resources. This typically means that companies still rely on individual people in order to manage external/internal interfaces, and time-related analysis, such as estimates (e.g. time and cost estimates) using those ERP systems.

Examples of the present disclosure seek to address or at least alleviate the above problems.

In a first aspect, there is provided An enterprise resource planning system, comprising: an enterprise resource planning (ERP) server operable to implement an enterprise resource planning application configured to be able to process planned data that is input by one or more users via a respective user device of a plurality of user devices, the planned data relating to a plurality of events associated with delivery of a plurality of items within an item distribution network; a plurality of marker generation devices, each marker generation device being operable to generate a plurality of markers that are each associated with a respective item for tracking delivery of that item within the item distribution network, in which each marker comprises respective identification data relating to one or more attributes of the item with which is it associated; a data collection server operable to communicate with the ERP server via a network; a plurality of marker readers located at respective item reading locations, the plurality of marker readers each being operable to read the identification data from the markers and send the identification data together with respective measured attribute data to the data collection server via the network; and in which: the ERP server is operable to receive actual event data, the actual event data comprising the identification data and respective measured attribute data generated by the plurality of marker readers; and the ERP server is operable to generate analytic data for analysis based on the planned data and the actual event data.

In a second aspect, there is provided An enterprise resource planning method, comprising: implementing, on an enterprise resource planning (ERP) server, an enterprise resource planning application configured to process planned data that is input by one or more users via a respective user device of a plurality of user devices, the planned data relating to a plurality of events associated with delivery of a plurality of items within an item distribution network; generating, by a plurality of marker generation devices, a plurality of markers that are each associated with a respective item for tracking delivery of that item within the item distribution network, in which each marker comprises respective identification data relating to one or more attributes of the item with which is it associated; communicating, by a data collection server, with the ERP server via a network; reading, by a plurality of marker readers located at respective item reading locations, the identification data from the markers and sending the identification data together with respective measured attribute data to the data collection server via the network; and receiving, by the ERP server, actual event data, the actual event data comprising the identification data and the respective measured attribute data generated by the plurality marker readers; and generating, by the ERP server, analytic data for analysis based on the planned data and the actual event data.

In a third aspect, there is provided An enterprise resource planning system, comprising: an enterprise resource planning (ERP) server operable to implement an enterprise resource planning application configured to be able to process planned data that is input by a user via a user device, the planned data relating to one or more planned events associated with delivery of an item; a marker generation device located at an item source location, the marker generation device being operable to generate a marker that is associated with the item for tracking delivery of the item from the item source location to an item destination location, in which the marker comprises identification data relating to one or more attributes of the item; a data collection server operable to communicate with the ERP server via a network; a first marker reader located at the item source location, the first marker reader being operable to read the identification data from the marker and send the identification data together with first measured attribute data to the data collection server via the network; and a second marker reader located at the item destination location, the second marker reader being operable to read the identification data from the marker and send the identification data together with second measured attribute data to the data collection server via the network; in which: the ERP server is operable to receive actual event data, the actual event data comprising at least one of: the identification data and first measured attribute data read by the first marker reader; and the identification data and second measured attribute data read by the second marker reader; the ERP server is operable to generate analytic data for analysis based on the planned data and the actual event data.

Other aspects and features are defined in the appended claims.

Examples of the disclosure may, for example, help track items within an item distribution network and generate analytic data, for example automatically. Therefore, for example, the examples of the disclosure may help provide a more efficient and cost effective way of carrying out enterprise resource planning. Furthermore, for example, by using a data collection server in cooperation with a ERP server, information such as identification data and measured attribute data of markers may be obtained from many different locations, such as factories and project sites, to generate actual event data so to help assist with more accurate enterprise resource planning and management. Additionally, for example, the actual event data may also comprise information input by one or more users, as well as the identification data and measured data of the markers, thus further helping with enterprise resource planning and management. Further advantages and objects will become apparent from the following description.

Examples of the disclosure will now be described by way of example only with reference to the accompanying drawings, in which like references refer to like parts, and in which:
Figure 1 is a schematic diagram of an enterprise resource planning system;
Figure 2 is a schematic diagram of an enterprise resource planning system including an intermediate location;
Figure 3 is a schematic diagram of a further enterprise resource planning system;
Figure 4 shows a chart that may be implemented by the ERP application;
Figure 5 shows a portion of the chart of Figure 4;
Figure 6 shows a portion of the chart of Figure 4 including a rating score;
Figure 7 shows a user interface window;
Figure 8 shows a user interface dashboard window;
Figure 9 shows a forum chat window;
Figure 10 is a flow chart of an enterprise resource planning method; and
Figure 11 schematically shows a computer system.

An enterprise resource planning system and method are disclosed. In the following description, a number of specific details are presented in order to provide a thorough understanding of the examples of the disclosure. It will be apparent however to a person skilled in the art that these specific details need not be employed in order to practise the examples of the disclosure. Conversely, specific details known to the person skilled in the art are omitted for the purposes of clarity in presenting the examples.

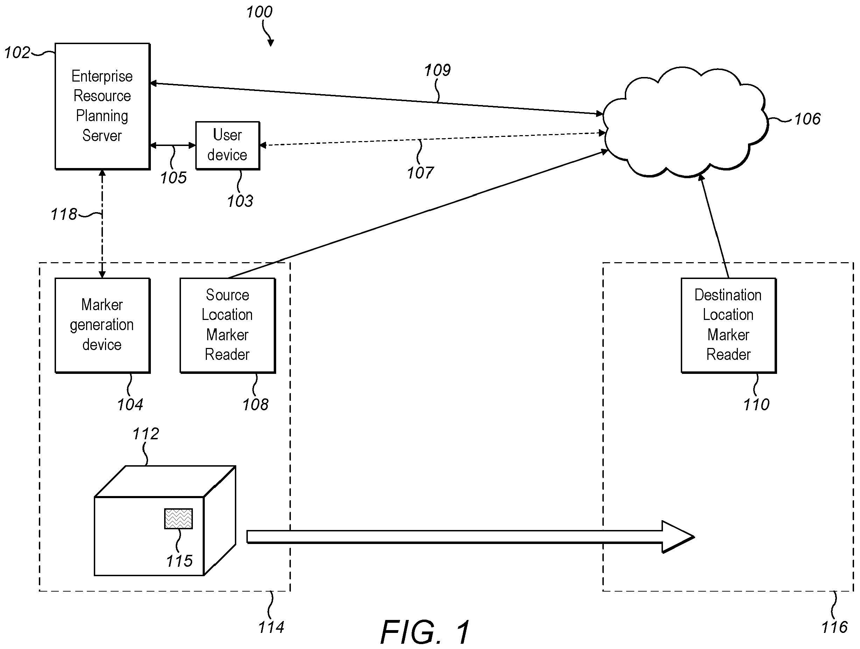

Figure 1 schematically shows an enterprise resource planning (ERP) system 100 according to examples of the disclosure. The ERP system 100 comprises an enterprise resource planning server 102, a user device 103, a marker generation device 104, a data collection server 106, a first marker reader 108, and a second marker reader 110.

In examples, the ERP server 102 is operable to implement an enterprise resource planning application. The ERP application may be configured to be able to process planned data that is input by one or more users via a respective user device of a plurality of user devices (such as user device 103). In examples, the ERP application is a Gantt chart application. In examples, the ERP application may be configured to be able to process one or more of: the planned data; actual event data (as described in more detail later below); and analytic data that may be generated by server 102. Functionality of the ERP application will be described in more detail later below.

More generally herein, when a user is referred to, this may be taken to mean an individual person, team of people, or business entity, for example associated with a respective company, business, contractor, supplier, or any other enterprise. A user device may, for example be a cellular mobile device, personal computer, or other suitable user device, as explained in more detail later below. For example, the user device 103 may communicate with the ERP server 102 via a first communication link (indicated by line 105), although it may also communicate with the data collection server 106 via a second communication link (as indicated by dashed line 107).

In examples, one or more of virtual reality, augmented reality, and artificial intelligence may be employed by one or more of the ERP server 102, the data collection server 106, and the user device(s), for example to allow a user(s) to interact with the ERP application. For example, the ERP application may be accessible from a user device via a web interface or existing computer application format, regardless of the operating system of the user device.

The data collection server 106 may be operable to communicate, for example bidirectionally, with the ERP server 102, for example via a third communication link (indicated by line 109).

Herein, when a communication link is referred to, this may be, for example, a network communication channel such as that provided by network functionality and links provided via the internet, although it will be appreciated that other suitable communication links such as a wired, wireless, and/or optical link or links, may be used, and that different types of link or communication channel may be combined to act as the communication links referred to herein.

The planned data may relate to one or more planned events associated with delivery of an item 112. In other words, for example, the planned data may relate to events that have not yet taken place. For example, the planned data may indicate that it is intended for the item 112 to be delivered to a destination location on a particular date. In examples, the item 112 may comprise materials, goods, product(s) or component(s) used in a project or used for assembly into another product or to a final destination of a customer for example. For example, the item may comprise: one or more chemicals for use in manufacturing a pharmaceutical product; a high voltage transformer that's been sent to an electricity substation construction site; a metallic structure that's been bought and sent to a centrifuge manufacturer; or a hydraulic engine that's been made and sent to a cruise ship factory. However, it will be appreciated that the item 112 may comprise any suitable item or plurality of items. For example, the item 112 may comprise a plurality of items or products, which may be the same or different to each other. For example, the item 112 may comprise a pallet of bricks for use on a construction site, a plurality of electronic components for use in assembly of an electronic device, or a plurality of ingredients for a pharmaceutical or healthcare product, although it will be understood that these are merely non-limiting examples.

The marker generation device 104 may be located at an item source location 114, such as a factory or warehouse. The marker generation device 104 may be operable to generate a marker 115 that is associated with the item 112 for tracking delivery of the item from the item source location 114 to an item destination location 116, such as a construction site, an assembly shop, etc. In examples, the marker 115 comprises identification data relating to one or more attributes of the item 112.

In examples, the marker 115 comprises one or more of: a radio frequency identification (RFID) device; a near field communication (NFC) device; a bar code; a quick response (QR) code; a magnetic stripe; and alphanumeric characters, for recording the identification data. For example, where the marker comprises a bar code and/or alphanumeric characters, the marker generation device 104 may comprise a printer operably connected to a suitable computing device for generating the marker 115. In examples, the marker may be read by a suitable reader such as the first marker reader 108 and/or second marker reader 110 using optical character recognition.

However, the marker 115 may comprise a passive RFID device for security, simplicity, and cost. For example, the marker generation device 104 may be configured to store the identification data to the marker 115 as a passive RFID device. For example, if the source location 114 is configured with an RFID reader and/or writer, then the marker 115 may comprise an RFID device. It will also be appreciated that although passive RFID is mentioned, other forms of RFID could be used, such as active RFID.

In examples, the identification data comprises one or more of: Manufacturing Company Name; Manufacturing Parent Company Name; Manufacturing Company Other ID (e.g. registration number); Location of Production; Data Date; Product Descriptions (e.g. model); Destination Company Name; Geographical Destination; Client identification data; Final Project identification data; and Courier Company Name. However it will be appreciated that any other type of data may be recorded on the markers.

In some examples, the identification data may comprise data entered by a user or by an admin user of member companies (such as an operator in the source location e.g. factory) or by printer software data, for example entered into the marker generation device 104.

In some examples, the ERP server 102 is operable to communicate with the marker generation device 104 via a fourth communication link (for example as indicated by dashed line 118) so as to generate the marker 115. For example, the identification data may be set or configured by the ERP application and communicated to the marker generation device 104 via a suitable communication channel, such as via the internet.

In examples, one or more of the markers may be affixed (e.g. attached) to respective packaging of the associated item. For example, the marker 115 may be in the form of a label, such as an adhesive label, that is stuck onto the packaging of the item 112, attached to the packaging, or to item 112 itself.

As mentioned above, the data collection server 106 may communicate with the ERP server 102 via the third communication link (indicated by line 109), which for example, may be a network, such as the internet, although it will be appreciated that other networks, and/or sub-networks, or other communication channels could be employed. In examples, the data collection server 106 may comprise one or more cloud servers. In some examples, the data collection server 106 may be implemented on the same server as the ERP server 102, although preferably they are implemented separately.

The first marker reader 108 may act as a source location marker reader that is located at the item source location 114, for example at the factory that produces the item 112. The first marker reader is operable to read the identification data from the marker 115 and send the identification data together with first measured attribute data to the data collection server 106 via the network. For example, the first marker reader 108 may be configured to operate as one or more of: an RFID reader (for example using an ultra-high frequency (UHF) interrogator antenna); a NFC reader; a bar code reader/scanner/decoder; a quick response (QR) code reader/scanner/decoder; a magnetic stripe reader; and alphanumeric reader (e.g. by employing OCR techniques, such as using an OCR scanner), for reading the identification data, although it will be appreciated that other techniques for reading data from the marker 115 could be used.

For example, the first marker reader 108 may read identification data such as factory name data, location of production data, date of production data, and product data, although it will be appreciated that any appropriate identification data could be read from the marker 115. The first marker reader 108 may read all or part of the identification data of the marker 115.

In examples, the first marker reader 108 is operable to generate the measured attribute data, for example based on one or more attributes of when the measurement was made (e.g. when the marker 115 was read).

For example, by reading the identification data and sending this together with the measured attribute data to the data collection server 106, the first marker reader 108 may generate actual event data, for example relating to when the item 112 was despatched from the item source location 114. In other words, the actual event data may comprise the identification data and first measured attribute data read by the first marker reader 108.

In examples, the second marker reader 110 is located at the item destination location 116, and may act as a destination location marker reader. For example, the second marker reader 110 may be located at a construction site that will receive the item 112, and use the item 112 in a project. In examples, the second marker reader 110 has the same functionality as the first marker reader 108, although it will be appreciated that they could have different functionalities. For example, the second marker reader 110 is operable to read the identification data from the marker 115 and send the identification data together with second measured attribute data to the data collection server 106 via the network.

The second marker reader 110 may read all or part of the identification data of the marker 115. The second marker reader 110 may read the same parts of the identification data of the marker 115 that were read by the first marker reader 108, or it may read different parts, or all of the identification data, depending on the requirements of the ERP application for example.

For example, the second marker reader 110 may act as the destination location marker reader and read data from the marker 115 such as label data (factory printer data), and project name. The second marker reader 110 may generate the second measured attribute data and send it to the data collection server 106. For example, the second measured attribute data may comprise one or more of: project name; site location (e.g. relating to the location of the second marker reader 110): receiving company identification data: courier company name; and arrival time and/or date. In other words, the second marker reader 110 may generate the actual event data. The actual event data may comprise the identification data and the second measured attribute data read by the second marker reader 110.

In some examples, the actual event data may also comprise user entered event data, that is entered by a user or users. For example, the user entered event data may relate to attributes that may not be able to be read by a marker reader, such as whether the item 112 passed a visual quality inspection e.g. on arrival at the item destination location 116, or when a Purchase Order has been raised by a client for a subject item that ought to get delivered, or when a process of a project/production (or liability of any sort) has been started or completed.

For example, a user or user(s) may input the user entered event data by using the user device 103. Preferably, the user device 103 may communicate the user entered event data to the ERP server 102 directly via the first communication link (e.g. indicated via the line 105). However, it will be appreciated that in some examples, the user entered event data may be communicated to the ERP server 102 via the data collection server 106 through the second communication line (as indicated by the dashed line 107) and the third communication link (line 109) or by a combination of direct communication (e.g. by the first communication link indicated by the line 105) and indirect communication via the data collection server 106.

Although the first marker reader 108 and second marker reader 110 have been described as being located at an item source location and a destination location respectively, it will be appreciated that they may be located at other appropriate locations, for example anywhere within a supply chain or item distribution network. It will also be appreciated that more than one marker reader could be employed at each location, for example where there is expected to be a high throughput of goods or items.

More generally, within the scope of the present disclosure, it is envisaged that the measured attribute data (e.g. first measured attribute data, and/or second measured attribute data) may comprise one or more of: timestamp data indicative of a time and/or date that the marker was read; data identifying identity of the reader (e.g. company details of where the marker was read, geographical location); and all or part of identification data generated by the source marker generation device 104. However, it will be appreciated that the measured attribute data could comprise any sort of appropriate data.

The ERP server 102 is operable to receive the actual event data. For example, the ERP server 102 may receive at least some of the actual event data via the data collection server 106. In examples, the actual event data comprises at least one of: the identification data and first measured attribute data read by the first marker reader; and the identification data and second measured attribute data read by the second marker reader. However, in examples where a plurality of marker readers may be deployed, more generally, the actual event data may comprise the identification data and respective measured attribute data generated by the plurality of marker readers, as will be described in more detail later below. As mentioned above, the actual event data may also comprise the user entered event data.

In some examples, the identification data and the measured attribute data may be received by the ERP server 102 via the data collection server 106, and the user entered event data may be received by the ERP server 102 from one or more user devices (such as user device 103) via the first communication link (indicated by the line 105).

However, in some examples, the user entered event data may be sent to the ERP server 102 via the data collection server 106 as mentioned above.

It will also be appreciated that the ERP server 102 and the data collection server 106 may be implemented at the same server as each other. It will also be appreciated that functionality provided by the ERP server 102 and the data collection server 106 need not be implemented on the same physical device, but elements could be implemented in a distributed manner across different hardware at different locations, for example utilising so-called cloud based solutions.

The ERP server 102 is operable to generate analytic data for analysis based on the planned data and the actual event data, for example as will be described later.

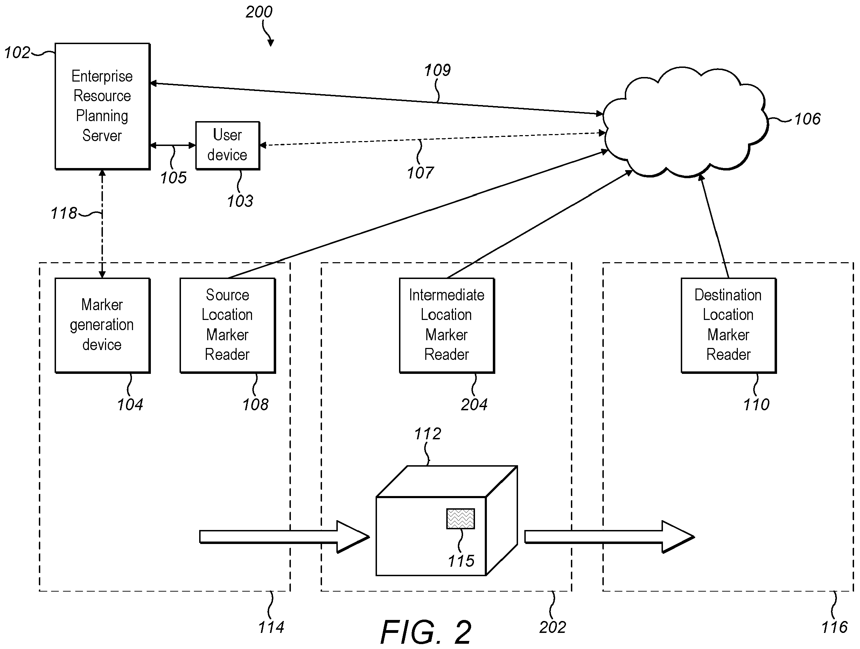

Figure 2 is a schematic diagram of an enterprise resource planning system 200 including an intermediate location 202. The enterprise resource planning system 200 is the same as the enterprise resource planning system 100, except that it includes the intermediate location 202, such as a logistic depot. In examples, a third marker reader 204 is located at the intermediate location 202. In examples, the intermediate location 202 is between the item source location 114 and the item destination location 116. Here, "between" may be taken to mean that the item may pass through the intermediate location 202 when being moved from the item source location 114 to the destination location 116 For example, the intermediate location may be a location that is different from the source location and the destination location.

In examples, the third marker reader 204 has the same functionality as the first marker reader 108, although it will be appreciated it could have different or similar functionalities. In examples, the third marker reader 204 is operable to read the identification data from the marker 115 and send the identification data together with third measured attribute data to the data collection server 106 via the network. In other words, the third marker reader 204 may function as an intermediate location marker reader. For example, in this example, the actual event data may comprise the identification data and third measured attribute data read by the third marker reader 204.

For example, the item 112 may be sent from the source location 114, where it is read by the first marker reader 108 and its despatch date (measured attribute data) sent together with the identification data of the marker 115 to the data collection server 106. On arrival at the intermediate location (e.g. logistics depot), the marker 115 may be read by the third marker reader 204. The identification data read by the third marker reader 204 may be sent together with the third measured attribute data (such as arrival date at the intermediate location, name and location of the intermediate entity) to the data collection server 106. For example, on departure from the intermediate location, the marker 115 may be read again by the third marker reader so that the departure date may also be sent to the data collection server 106, together with the identification data. On arrival of the item 112 at the destination location 116, the second marker reader 110 may read the arrival date (e.g. second measured attribute data) and send this together with the identification data to the data collection server 106. The data collection server 106 may send the actual event data to the ERP server 102 in real time, for example as soon as it is received from the respective marker reader. Therefore, for example, the ERP application may be updated with the date and time of delivery for example, or with delivery location of the item for example, so as to help provide more accurate, efficient, and sustainable enterprise resource planning.

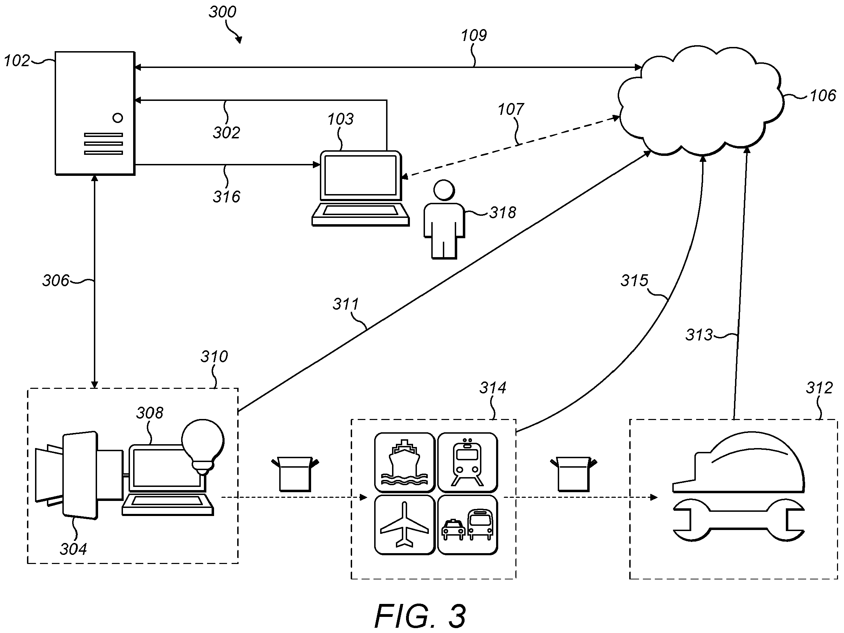

Referring to Figure 3, a further example of an enterprise resource planning system according to examples of the disclosure is shown. In particular, Figure 3 shows an enterprise resource planning system 300 which comprises the ERP server 102, the user device 103 and the data collection server 106. In a similar manner to that mentioned above, the ERP server 102 is operable to implement the enterprise resource planning application (such as a Gantt chart application). The ERP application may comprise planned data that is input by one or more users via a respective user device 103 of a plurality of user devices. In examples, the ERP application may comprise the actual event data, for example, received from the marker reader(s) and/or input by a user(s) such as that corresponding to the user entered event data. In examples, the planned data relates to a plurality of events associated with delivery of a plurality of items within an item distribution network. For example one or more user may enter planned data using a respective user device 103, and this planned data may be sent from the user device 103 to the ERP server 102 (e.g. as indicated by the arrow 302 in Figure 3) for inclusion in the ERP application. For example, the planned data may be sent to the ERP server 102 via a suitable communication link, such as provided by the internet, although it will be any suitable communication method may be used.

The ERP system 300 comprises a plurality of marker generation devices 304. In examples, each marker generation device is operable to generate a marker that is associated with a respective item for tracking delivery of that item within the item distribution network. For example the marker generation devices may be a marker generation device such as the marker generation device 104 described above with reference to Figure 1. In a similar or same manner to that described above, each marker comprises respective identification data relating to one or more attributes of the item with which is it associated. For example, the marker generation device may be a printer for printing a bar code onto a suitable medium, such as an adhesive label, that may then be attached to the item or the packaging of the item, although other printers, or marker generation devices may be used. For example, a printer manufactured by Zebra®, Seiko®, or SATO® may be used.

In examples, the marker generation devices may be operable to communicate with the ERP server 102 via a suitable communication link, such as the internet, as indicated by bidirectional arrow 306 (e.g. corresponding to the fourth communication link of Figures 1 and 2 indicated by the dashed line 118). For example, an operator at a factory that manufactures the item may be able to use a respective computing device 308 in cooperation with the marker generation device 304 to communicate with the ERP server 102 so as to receive data in order to generate the identification data for recording to the marker. In other words for example, the marker generation device 104 may be implemented by the computing device 308 in cooperation with the marker generation device 304.

In other examples, the computing device 308 may cooperate with the marker generation device 304 to generate the marker, for example based on local inventory data or purchase order data for example, without receiving data from the ERP server 102.

In some examples, the computing device 308 may cooperate with the marker generation device 304 to transmit verification data relating to the identification data that was recorded to the marker to the ERP server 102 via the communication link indicated by the bidirectional arrow 306. In other words, for example, the marker generation device 104 may transmit the verification data to the ERP server 102 via the fourth communication link.

The ERP system 300 comprises a plurality of marker readers, such as the first marker reader 108, second marker reader 110 and third marker reader 204, located at respective item reading locations.

In examples, the plurality of marker readers comprise a plurality of first marker readers which may be located at respective item source locations 310 within the item distribution network. The item source locations may, for example, be factories, manufacturing locations, warehouses (e.g. for imported items), workshops, assembly units, or other suitable locations from which one or more items used in industry may be sourced.

In examples, the first marker readers of the ERP system 300 may be implemented and operate in the same manner as the first marker reader 108 as described above, in other words as source location marker readers. More generally, the first marker readers are operable to read the identification data from the marker and send the identification data together with respective first measured attribute data to the data collection server 106 via the network, for example as indicated by the arrow 311.

In examples, the ERP server 102 may compare the data read by the first marker readers (e.g. source location marker reader 108) and received via the data collection server 106 with the verification data sent by the marker generation device(s). This, for example, allows a double check or benchmark to be performed to help verify the accuracy of the identification data read by the first marker readers with that which was recorded to the marker(s) by the marker generation device(s).

In examples, the plurality of marker readers may comprise a plurality of second marker readers which may be located at respective item destination locations 312 within the item distribution network. The item destination locations may, for example, be construction sites, manufacturing locations, workshops, assembly shops, or other suitable locations where the items may be used in a project or may be used in another product under manufacturing or assembly for example. In examples, the second marker readers of the ERP system 300 may be implemented and operate in the same manner as the second marker reader 110 as described above, in other words as destination location marker readers.

More generally, the second marker readers may be operable to read the identification data from the marker and send the identification data together with respective second measured attribute data to the data collection server 106 via the network, for example as indicated by the arrow 313. For example, the second marker readers may read data such as that relating to marker data (data generated by marker generation device 104 or 304 for example) and send it along with second measured attribute data such as project name, site location, receiving company identity, and arrival date to the data collection server 106. However, it will be appreciated that other data could be used.

In examples, the plurality of marker readers comprise a plurality of intermediate location readers (third marker readers) located at respective intermediate locations 314 within the item distribution network, for example between the item source locations 310 and the item destination locations 312.

For example, the intermediate locations may be logistic depots, e.g. associated with one or more of sea, rail, air, and road transport, although it will be appreciated that other transport modes could be used, and that the intermediate locations could be other suitable locations, such as an intermediate assembly plant, or sub-assembly factory.

In examples, the third marker readers of the ERP system 300 may be implemented and operate in the same manner as the third marker reader 204 as described above, in other words as intermediate location marker readers. The intermediate location readers are operable to read the identification data from the marker and send the identification data together with respective third measured attribute data to the data collection server 106 via the network, for example as indicated by the arrow 315. For example, the third marker readers may read data such as that relating to marker data (data generated by marker generation device 104 or 304 for example), and send it along with third measured attribute data such as depot name, dispatch company identity, arrival date, and dispatch date and send it to the data collection server 106. However, it will be appreciated that other data could be used.

In other words, more generally, the plurality of marker readers may each be operable to read the identification data from the markers and send the identification data together with respective measured attribute data to the data collection server via the network. The ERP server 102 may be operable to receive the actual event data via the data collection server 106, in other words from the data collection server 106. The actual event data may comprise the identification data and the respective measured attribute data generated by the plurality of marker readers.

As mentioned above, the ERP server 102 may be operable to generate analytic data for analysis based on the planned data and the actual event data.. For example, ERP application may benchmark (e.g. compare) the actual event data with the planned data. For example, the ERP server 102 may send the analytic data to one or more of the plurality of the user devices e.g. as illustrated by the arrow 316.

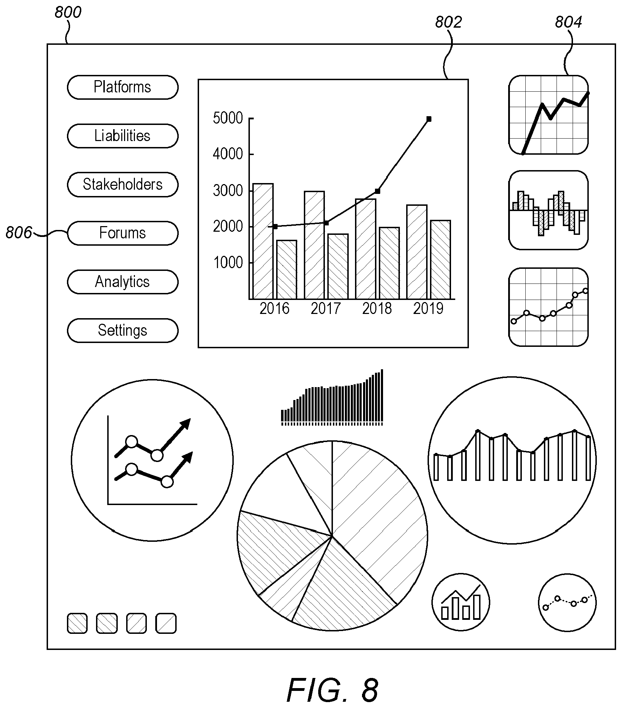

In examples, the ERP server 102 may be operable to generate forecast data based on the planned data and the actual event data. For example, the forecast data may be associated with a completion date of a project involving the item. Accordingly, in examples, the ERP server 102 is operable to update the forecast data based on the analytic data. For example, the ERP server 102 may calculate a time discrepancy data indicating a time difference between the planned date, as indicated by the planned data, and the actual date, for example actual delivery date of the item to a particular location and generate data analytics such as those shown in figure 8 for example. In examples, the time discrepancy data uses a date (in DD.MM.YYYY format for example) together with a time (in 24 hour clock for example), based on the actual event data and the planned data. However, it will be appreciated that other suitable formats may be used.

For example, items such as reinforced steel girders used in a construction project such as construction of an airport may be required at the construction site (e.g. destination location 312, 116) on a certain date in order for the next stage of construction to be implemented. The forecast may be based on the items arriving at the destination location on that particular date. However, they may be despatched from the source location (e.g. source location 114, 310) earlier than expected and subsequently arrive before the planned date. By tracking the progress of delivery of the item (e.g. item 112) based on the identification data and the measured attribute data read by the marker readers, the ERP application implemented on the ERP server 102 may be able to update the Gantt chart of the ERP application in substantially real time, and so update the forecast data accordingly based on the analytic data, for example.

Furthermore, in examples, the ERP server 102 is operable to communicate with the plurality of user devices via the network (e.g. indicated by the arrow 316), for example so as to allow a user or users 318 to use their user device to access the forecast data. In other examples, the analytic data may be sent to one or more of the plurality of the user devices (e.g. user device 103) by the ERP server 102. For example, this may allow a user to view descriptive statistical measures, e.g. analytic data based on the time variance between the planned event and the actual event as indicated by the actual event data. For example, the ERP server 102 may cooperate with the user device 103 to generate data for one or more of the following sample groups: Producing Company (e.g. a specific product of that manufacturer or a time efficiency in a specific market); Platform (described in more detail later below for example relating to time planning techniques and estimates which may be provided to users); Industry (e.g. automotive vs. pharmaceutical); and Geographical Location (e.g. time efficiency of industries in different countries). However, it will be appreciated that other suitable data may be generated from the analytic data, for example based on user requirements. Additionally, data analysis using machine learning and so-called "big data" techniques may be performed

In some examples, the ERP server 102 may be operable to generate a project plan based on past data associated with events that have already happened (past data) and the planned data (for example using known Gantt chart techniques). In some examples, the ERP server 102 may calculate a critical path based on the project plan. In examples, the EPR server 102 may update the project plan based on the actual event data. Therefore, for example, the critical path may also be updated as a result of updating the project plan based on the actual event data. In other words, for example, a Gantt Chart associated with a project may be kept up to date substantially in real time, based on the actual event data and/or the analytic data, so as to help provide better project efficiency and help reduce costs.

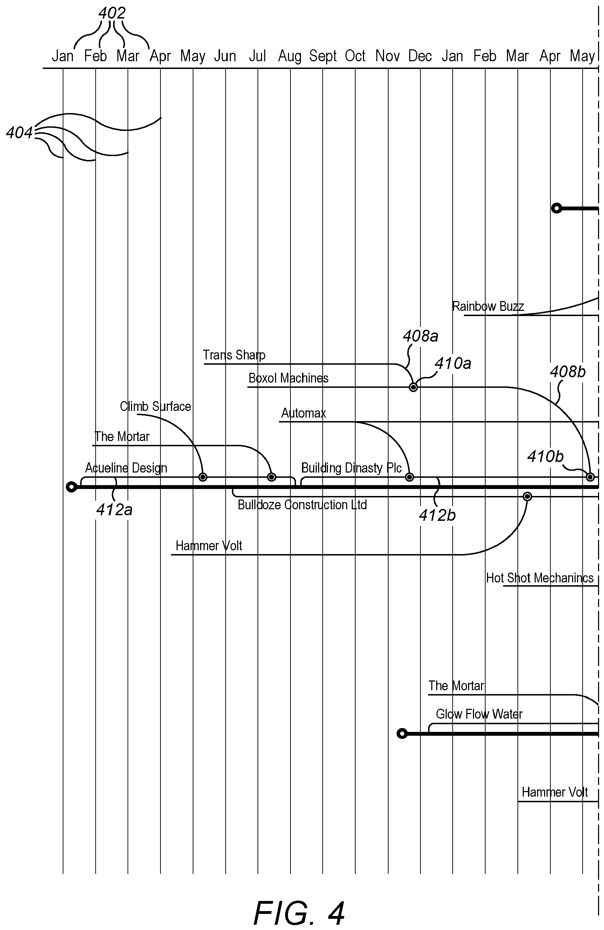

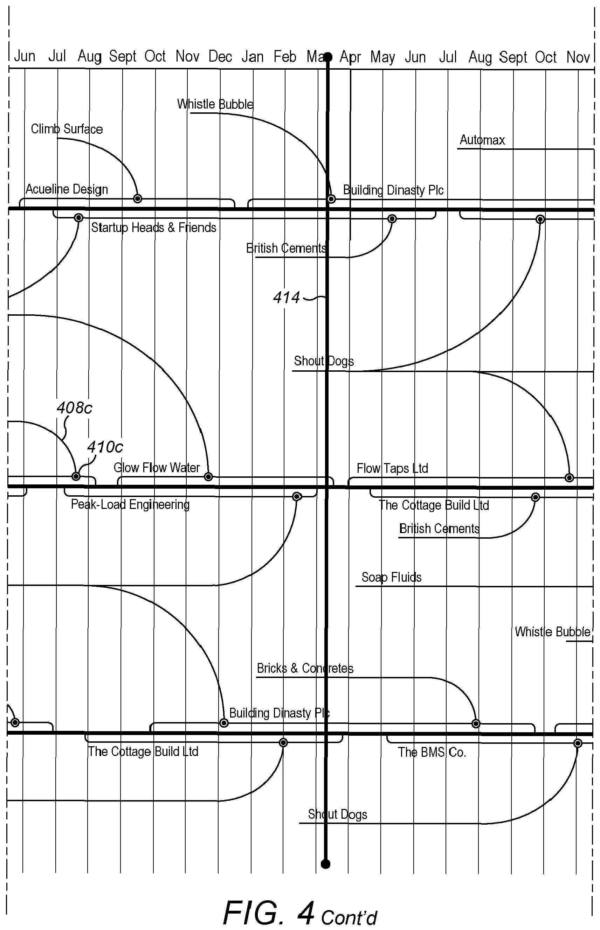

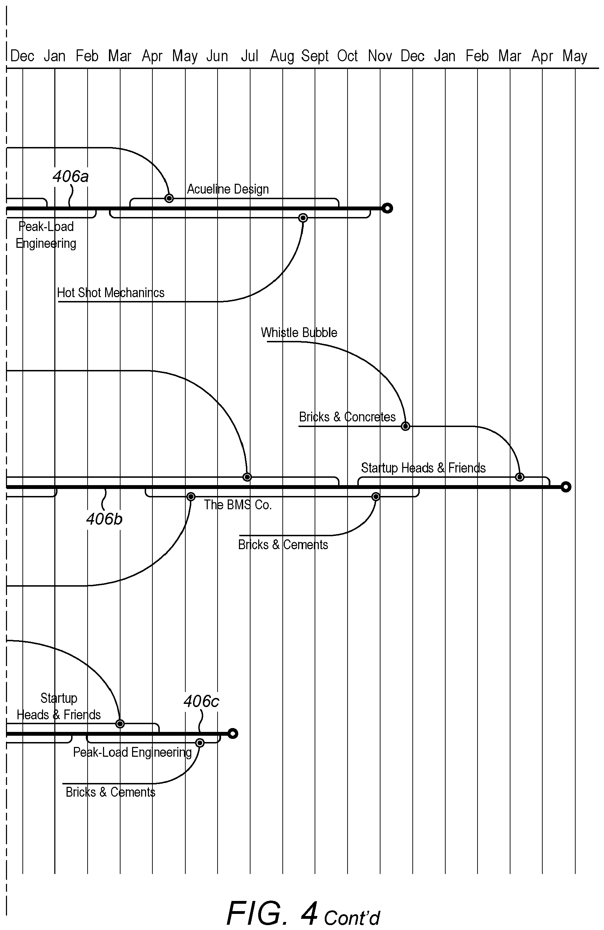

Figure 4 shows a chart that may be implemented by the ERP application running on the ERP server 102. For example, the chart may be displayed on a suitable display screen such as that of the user device 103 in communication with the ERP server 102. In Figure 4, horizontal lines represent durations that may be specified by the time scale in the background of the display, for example with month indicators (e.g. 402) together with associated vertical lines 404.

In the example of Figure 4, thick horizontal lines (e.g. horizontal lines 406a, 406b, 406c) represent respective "Platforms" which may be mega-projects such as governmental schemes or duration of international pledges that need global industries to collaborate, although it will be appreciated that the "Platforms" could represent any other type of project as appropriate.

Curved lines (such as curved lines 408a, 408b, 408c) may represent deliverables from manufacturers or suppliers. Nodes (such as nodes 410a, 410b, 410c) may indicate deliverables from suppliers that intersect with its client process and represent an agreed date, for example delivery of a particular item from the supplier to the client. Brackets (such as brackets 412a and 412b) may be used to represent a duration of involvement by a contractor on the "Platforms". In examples, the lines and/or nodes may act as hyperlinks, for example linking to information associated with a specific event, including information about stakeholders that are involved. A vertical line 414, referred to as a "Locator" may be used to indicate the present time and date of the regional time of the user. In examples, the locator may be moveable horizontally to relate to past or future dates.

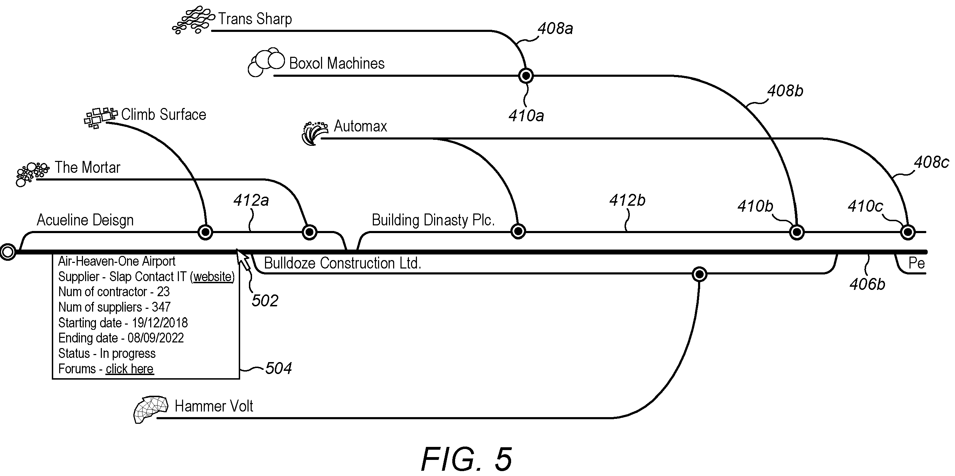

Figure 5 shows a portion of the chart of Figure 4. Referring to Figure 5, a user 318 may operate a suitable input device, such as a mouse, to control a pointer 502 on the display screen. For example, a user may "click" on the "Platform" line 406b, which may cause the ERP server 102 to send appropriate commands and data to the user device 103 to cause a hyperlink pop-up 504 indicating data related to the "platform" to be displayed.

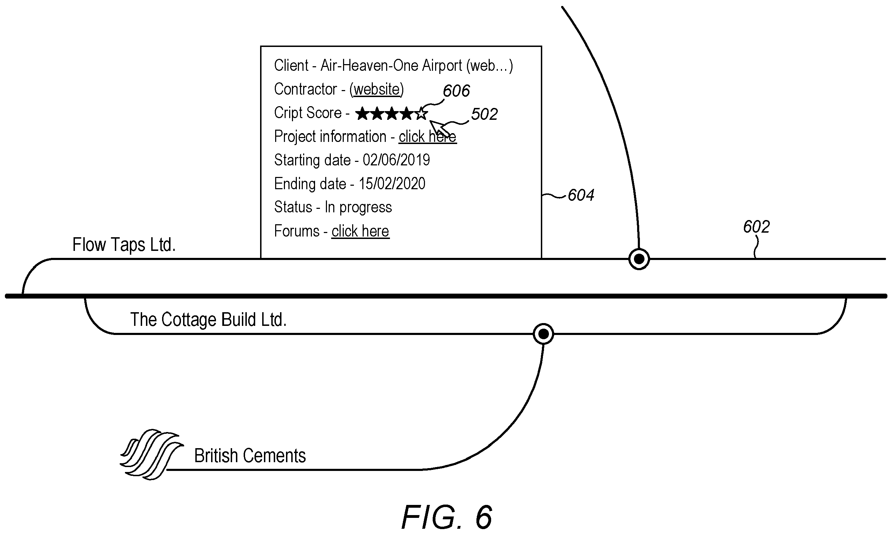

Figure 6 shows a portion of the chart of Figure 4 including a rating score. For example, a user may click on bracket 602 to cause the ERP server 102 to generate a hyperlink pop-up 604 related to a company "Flow Taps Ltd.". In examples, hyperlink pop-ups may include a relevant score associated with a company, for example indicated with a star rating 606, although other appropriate techniques of displaying the score may be used. For example, the score may be generated based on a degree of punctuality of delivery, or punctuality of completion of a project. In some examples, the score may be based on the analytic data, e.g. based on the comparison between the planned data and the actual event data.

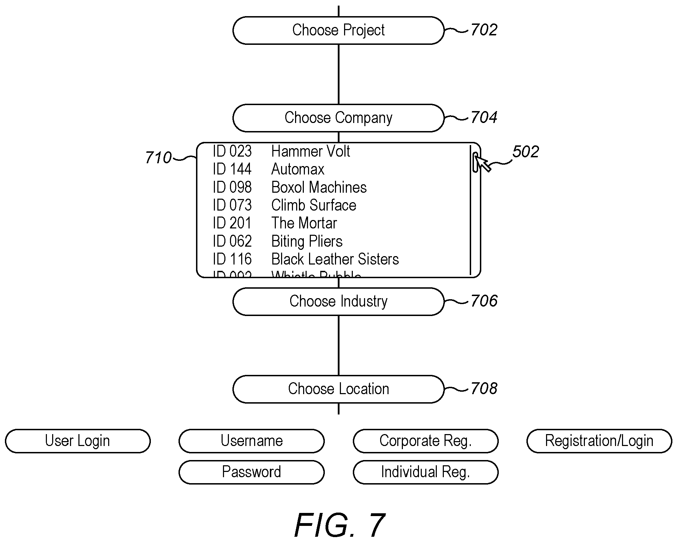

For example, a company or user(s) may create networks using commonalities (e.g. features in common between companies). In examples, each contributing company may have a presence in another "Platform", "industry" or "area", for example, and so common features between different aspects may be determined. For example, referring to Figure 7, which shows a user interface window, a user may interact with the ERP application to filter chart data stored in the ERP server 102 according to filtered criteria such as a "project or platform" filter 702, a "company" filter 704, an "industry sector" filter 706, and "geographical area" filter 708, although it will be appreciated that other filtering criteria may be applied. For example, filtering including selected companies from a drop-down menu 710 associated with the "company" filter 704 may result in the chart shown in Figure 4.

As mentioned above, the Locator 414 may be moveable horizontally (i.e. left or right). For example, the Locator 414 may be moved to the left of the current time/date position, so as to relate to time/date in the past or it may be moved to the right of the current time/date position, so as to relate to a time/date in the future. In examples, data analysis may be carried out based on time difference values between a time/date position of the Locator 414 and the present (current) time/date. In other examples, data analysis may be carried out based on time difference values between the time/date position of the Locator 414 and a user selected time/date

For example, if the position of the Locator 414 is such that it relates to a future time/date, future data (e.g. forecast data) may be generated such as that relating to 'financial forecasts & estimates', 'planned data of scheduled works', 'progress measurement indices', 'information on supplies and deliveries', and 'risk indices', although it will be appreciated that other types of data could be generated. For example, based on budget, expected income, and cost associated with completion of events up to the time/date indicated by the Locator 414, the ERP application may generate a financial forecast. In some examples, the forecast data may be based on the assumption that each part of the project is delivered on time. However, as mentioned above, the ERP application, may, for example, update the forecast data based on the analytic data generated in response to the actual event data.

If, for example, the position of the Locator 414 is such that it relates to a time/date in the past, data analysis may be based on the actual event data and accrued data. For example, the ERP application may generate the analytic data (data analytics) based on the past data, such as data relating to 'descriptive statistics', performance indices', 'frequency data', 'graphs', although it will be appreciated that other types of analysis could be performed and/or generated. For example, the ERP application, in response to user input, may generate a performance index (indice) indicative of how many set dates a company may and/or can meet within a threshold time of the intended completion date.

Referring to Figure 8, which, for example, shows a user interface dashboard window 800, a user may be able to view the past analysis data and the forecast data in the user interface dashboard window 800. For example, the user may be able to view past financial performance in a past data display area 802, and view a financial forecast in a forecast display area 804. However, it will be appreciated that the dashboard window 800 may display any other type of appropriate data, e.g. based on user requirements. For example, a user (such as individual within a company or a team within a company) may use the dashboard window 800 to control their deliverables and liabilities to communicate with their stakeholders and with other members in their networks.

Suppliers and Contractors may also communicate new proposed dates with Clients, e.g. via a suitable network, for interaction via the dashboard window 800. For example, a new delivery date for an item may be proposed by a first user (e.g. supplier) causing a pop-up window (e.g. forum chat window) to appear in the dashboard window 800 being used by second user (e.g. contractor) who will use that information. In some examples, a notification such as that provided by email, text message, or the like may be provided instead of, or as well as, the pop-up window. If the second user accepts the new delivery date, then for example, the ERP application may automatically adjust to the new delivery date, for example to update data associated the chart shown in Figure 4.

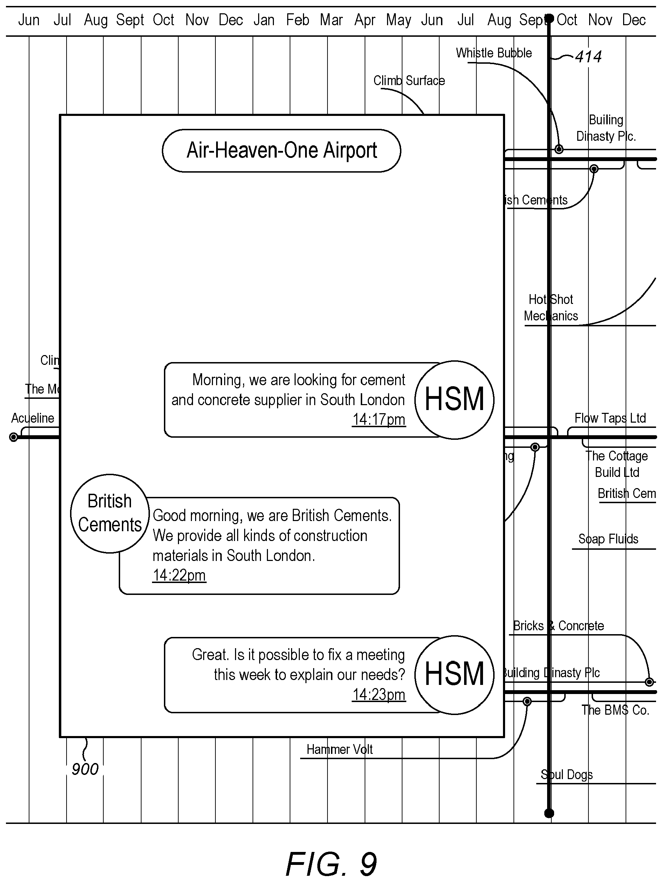

Figure 9 shows a forum chat window. In examples, a user may interact with other users of the ERP application, for example via a "Forum". For example, a user may click a forum selection area 806, so as to cause the ERP application to cause a forum chat window 900 to be displayed, for example superimposed on the chart of Figure 4, or in the dashboard window 800.

In examples, forums are virtual networking clusters relating to subjects specific to filtered commonalities, for example, relating to a particular Platform or particular to any other shared commonality/subject amongst users. For example, a forum may act as a chat facility similar to that found in common social media sites and/or networking sites and/or other internet chat forums. However, it will be appreciated that Forum(s) could relate to different types of features in common (commonalities) between users. A few examples of these features in common or commonalities are regional circumstances, industry sector, a common Platform or project. These common features or commonalities may be applicable to more than one platform and/or applicable to more than one user company. For example, a Forum may relate to all users within a particular geographical distance of a project site. A Forum may relate to companies active in a common international pledge. In examples, the ERP application may allow authenticated file sharing between users. Forums may also allow users to agree on new terms, such as a new delivery date, or new completion date, between suppliers and their contractors. These agreed terms amongst member companies may be taken into account as planned or as actual data on ERP server 102.

In examples, the ERP application may be provided as an open source virtual platform provided via the internet for interactively sharing data, for example data relating to different businesses' time-frames, (e.g. for planned/actual delivery dates of items, expected start and completion of contracts/liabilities etc.). This may be updated based on the analytic data, for example. For example, the ERP application may generate analysis based on data populations and/or data samples that are collated using planned data and/or actual event data, for a user or users to help assist in their Enterprise Resource Planning and review process for example.

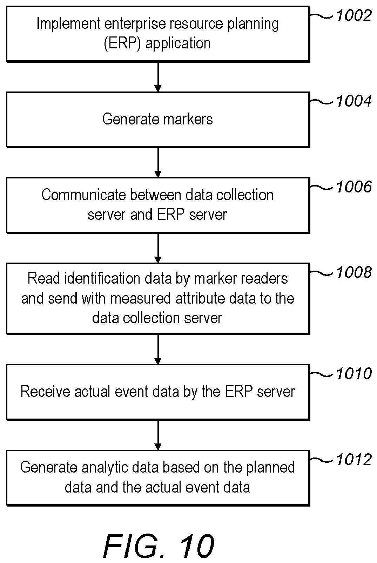

Figure 10 is a flowchart of an enterprise resource planning method. For example, the method of Figure 10 may be used to carry out the techniques described herein.

At a step s1002, the ERP server 102 implements the enterprise resource planning application. As mentioned above, the enterprise resource planning application comprises planned data that is input by one or more users (such as the user 103) via a respective user device of a plurality of user devices or may be taken into account by analytical algorithms of the ERP server. The enterprise resource planning application may also comprise the actual event data such as that which may be (or may have been) recorded either by plurality of marker readers or been sent via plurality of user devices. The user devices may be of any suitable type, such as a desktop computer, a thin client, a smart phone, a tablet device, a laptop, or other suitable user device. As previously mentioned, the planned data and/or actual event data may relate to a plurality of events associated with delivery of a plurality of items within an item distribution network. The planned data and/or actual event data may also relate to a plurality of events associated with planned/actual completion dates of contracts/liabilities of involved companies.

For example, referring to Figure 3, items may be delivered from the source locations 310 to the destination locations 312 via the intermediate locations 314. In other words, for example, the item distribution network may include one or more of: the source locations 310; the intermediate locations 314; and the destination locations. It will also be appreciated that more than one intermediate location may be used. For example, the item may be shipped from the item source location 114 to the item destination location 116 via a plurality of intermediate locations such as intermediate location 202 and/or intermediate location 314.

At a step s1004, a plurality of markers that are each associated with a respective item for tracking delivery of that item within the item distribution network are generated by the plurality of marker generation devices (for example, each being implemented as the marker generation device 104). In examples, each marker (such as the marker 115) comprises respective identification data relating to one or more attributes of the item with which is it associated.

At a step s1006, the data collection server 106 communicates with the ERP server 102. In other words, communication between the data collection server 106 and the ERP server 102 is carried out.

At a step s1008, the plurality of marker readers located at respective item reading locations such as the source locations 114, 310, intermediate locations 202, 314, and destination locations 116, 312, may read the identification data from the markers. The identification data may be sent together with the respective measured attribute data may be sent to the data collection server 106 via the network.

For example, the source location marker reader 108 located at the item source location 114 may read the marker 115 at the time of departure of the item 112 from the source location 114 and send (transmit) the identification data together with the measured attribute data to the data collection server 106. Subsequently, the item may arrive at an intermediate location, such as the intermediate location 202, which may be a logistics depot for example. The intermediate location marker reader 204 located at the intermediate location 202 may read the marker 115 and transmit the identification data with the measured attribute data (such as time/date of arrival at the intermediate location 202) to the data collection server 106, and similarly the marker 115 may be read again with the corresponding data transmitted to the data collection server 106 when the item 112 leaves the intermediate location 202. The destination marker reader 110 located at the destination location 116 may then read the marker 115 when the item 112 arrives at the destination location 116, and transmit the identification data of the marker 115 together with the measured attribute date (e.g. time/date of arrival of the item 112 at the destination location 116) to the data collection server 106. A similar procedure may be carried out in respect of a plurality of items with respect to a plurality of item reading locations.

It will be appreciated that in some examples, the identification data read by a marker readers and the measured attribute data may be transmitted to the data collection server 106 when a marker is read. However, in other examples the identification data and the measured attribute data could be cached locally by the marker readers to generate cached marker data. In examples, identification data and measured attribute data in respect of more than one marker may be stored locally by the marker readers to generate the cached marker data.

In other words, for example, the plurality of marker readers are operable to cache locally the identification data and the measured attribute data so as to generate cached marker data. This functionality may preferably be implemented by all of the marker readers, although it will be appreciated that in some examples, some marker readers may not implement this functionality, e.g. depending on the resources of the marker reader.

For example, the cached marker data may be generated with respect to a particular time window (duration of time). In other words, for example, a marker reader may store the cached marker data in relation to a predetermined time period, such as every 15 minutes, every 30 minutes, every 60 minutes, although it will be appreciated that any other time period could be used. In examples, the marker readers may then send the cached marker data to the data collection server 106, on the expiry of the particular time window. In other words, for example, the marker readers may send the cached marker data periodically, for example, every predetermined time period.

In other examples, the cached marker data may be sent by the marker reader when a number of markers that have been read exceeds a threshold.

In some examples the cached marker data may be deleted from the marker reader once it is sent to the data collection server 106, for example to help save memory resources. In other examples, the cached marker data may be stored permanently in a memory of the marker reader, for example to allow for future verification if needed. In some examples, the cached marker data may be backed up to a back-up device, and then deleted, or retained in the marker reader, as appropriate.

Therefore, for example, by sending the cached marker data periodically or when a threshold number of markers that have been read is exceeded, the frequency that data may be sent by the marker reader to the data collection server 106 may be reduced. This may be especially useful when there is a high throughput of items at a particular location, for example. Therefore, the number of overall number data packets that may need to be sent may be reduced. Furthermore, network resources may be freed up more predictably, for example, thus helping planning of computer network resources in cooperation with the ERP application resources, for example.

It will be appreciated that some marker readers may send the cached data periodically, and that other marker readers may send the cached data when the threshold of number of markers that have been read is exceeded. Alternatively, all marker readers may implement the same method for sending the cached marker data.

At a step s1010, the ERP server 102 receives the actual event data. As mentioned above, the actual event data comprises the identification data and the respective measured attribute data generated by the plurality marker readers. The actual event data may also comprise the user entered event data. In examples, the ERP server 102 may receive at least some of the actual event data via the data collection server 106, for example as described above.

At a step s1012, the ERP server 102 generates the analytic data for analysis based on the planned data and the actual event data, , for example in respect of analysis relating to the position of the Locator 414 as mentioned above.

It will be appreciated, that while the steps of Figure 10 have been described sequentially, they may be implemented in other orders, and/or concurrently with each other. For example, the step s1006 in which the data collection server 106 communicates with the ERP server 102 may be carried out at the same time (e.g. concurrently) with all the other steps of the method of Figure 10, for example so that the ERP server 102 can be kept updated with the actual event data.

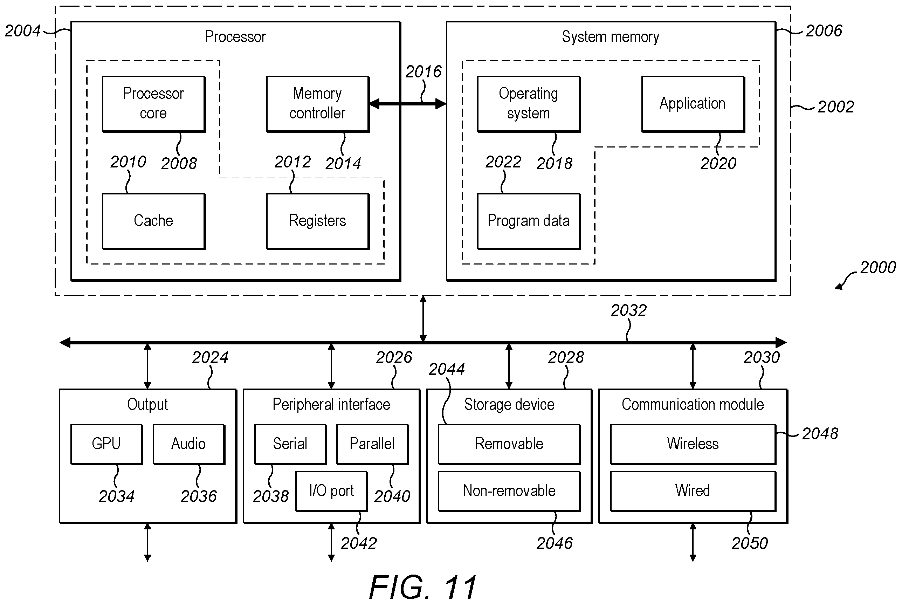

Figure 11 schematically shows a computer system for implementing methods of examples of the disclosure. In particular, Figure 11 shows an example of a computing device 2000, for example which may be arranged to implement one or more of the examples of the methods and techniques described herein.

For example, one or more computing devices (such as those corresponding to the computing device 2000) may act as one or more of the ERP server 102, the data collection server 106, and the user device 103. The computing device 2000 may cooperate with a marker generation device (e.g. marker generation device 104) or marker generation devices, to generate the marker, and/or it may be considered that the marker generation device may comprise the computing device 2000. It will also be appreciated that the marker reader(s) may comprise the computing device 2000 and/or cooperate with the computing device 2000 to transmit the identification data and the measured attribute data to the data collection server 106.

In examples, the computing device 2000 may comprise a main unit 2002. The main unit 2002 may comprise a processor 2004 and a system memory 2006. In examples, the processor 2004 may comprise a processor core 2008, a cache 2010, and one or more registers 2012. In examples, the processor core 2008 may comprise one or more processing cores and may comprise a plurality of cores which may run a plurality of threads. The processor 2004 may be of any suitable type such as microcontroller, microprocessor, digital signal processor or a combination of these, although it will be appreciated that other types of processor may be used.

In examples, the processor core 2008 may comprise one or more processing units. In examples, the processor core 2008 comprises one or more of a floating point unit, an arithmetic unit, a digital signal processing unit, or a combination of these and/or plurality of other processing units, although it will be appreciated that other processing units could be used. In examples, the cache 2010 may comprise a plurality of caches such as a level one cache and a level two cache, although other appropriate cache arrangements could be used.

In examples, the processor 2004 comprises a memory controller 2014 operable to allow communication between the processor 2004 and the system memory 2006 via a memory bus 2016. The memory controller 2014 may be implemented as an integral part of the processor 2004, or it may be implemented as separate component.

In examples, the system memory 2006 may be of any suitable type such as non-volatile memory (e.g. flash memory or read only memory), volatile memory (such as random access memory (RAM)), and/or a combination of volatile and non-volatile memory. In examples, the system memory 2006 may be arranged to store code for execution by the processor 2004 and/or data related to the execution. For example, the system memory may store operating system code 2018, application code 2020, and program data 2022. In examples, the application code 2020 may comprise code to implement one or more of the example methods described herein, for example to implement the steps described above with reference to Figure 10. The application code 2020 may be arranged to cooperate with the program data 2022 or other media, for example to allow implementation of the ERP application. For example, the ERP server 102 may be implemented by the computing device 2000, and the application code 2020 may act as the ERP application described herein.

In examples, the computing device 2000 may have additional features, functionality or interfaces. For example main unit 2002 may cooperate with one or more peripheral devices for example to implement the methods described herein. In examples, the computing device 2000 comprises, as peripheral devices, an output interface 2024, a peripheral interface 2026, a storage device 2028, and a communication module 2030. In examples, the computing device comprises an interface bus 2032 arranged to facilitate communication between the main unit 2002 and the peripheral devices.

In examples, the output device 2024 may comprise output devices such as a graphical processing unit (GPU) 2034 and audio output unit 2036 for example arranged to be able to communicate with external devices such as a display, and/or loudspeaker, via one or more suitable ports such as audio/video (A/V) port. In examples, the peripheral interface 2026 may comprise a serial interface 2038, a parallel interface 2040, and a input/output port(s) 2042 which may be operable to cooperate with the main unit 2002 to allow communication with one or more external input and/or output devices via the I/O port 2042. For example, the I/O port 2042 may communicate with one or more input devices such as a keyboard, mouse, touch pad, voice input device, scanner, imaging capturing device, video camera, and the like, and/or with one or more output devices such as a 2D printer (e.g. paper printer), or 3D printer, or other suitable output device. For example, the I/O port 2042 may be used to communicate with a marker printer, and/or marker reader, such as those described herein.

In examples, the storage device may comprise removable storage media 2044 and/or non-removable storage media 2046. For example, the removable storage media may be random access memory (RAM), electrically erasable programmable read only memory (EEPROM), read only memory (ROM) flash memory, or other memory technology, optical storage media such as compact disc (CD) digital versatile disc (DVD) or other optical storage media, magnetic storage media such as floppy disc, magnetic tape, or other magnetic storage media. However, it will be appreciated that any suitable type of removable storage media could be used. Non-removable storage media 2046 may comprise a magnetic storage media such as a hard disk drive, or solid state hard drive, or other suitable media, although it will be appreciated that any suitable non-removable storage media could be used. The storage device 2028 may allow access by the main unit 2002 for example to implement the methods described herein. For example, the removable storage media 2044 and/or removable storage media may comprise the application code 2020.

In examples, the communication module may comprise a wireless communication module 2048 and a wired communication module 2050. For example, the wireless communication module may be arranged to communicate wirelessly via a suitable wireless communication standard for example relating to Wifi, Bluetooth, near field communication, optical communication (such as infrared), acoustic communication, or via a suitable mobile telecommunications standard. The wired communication module may allow communication via a wired or optical link for example by Ethernet or optical cable. However, it will be appreciated that any suitable communication module could be used. For example, the communication module 2050 may be used to communicate between the ERP server 102 and the data collection server 106. In examples, the communication module 2050 may help implement a communication link as described herein.

It will be appreciated that in examples of the disclosure, elements of the disclosed methods may be implemented in a one or more computing devices (such as the computing device 2000 described above with reference to Figure 11) in any suitable manner. For example, a conventional computing device may be adapted to perform one or more of the methods described herein by programming/adapting one or more processors of the computing device. As such, in examples, the programming/adapting may be implemented in the form of a computer program product comprising computer implementable instructions stored on a data carrier and/or carried by a signal bearing medium, such as floppy disk, hard disk, optical disk, solid state drive, flash memory, programmable read only memory (PROM), random access memory (RAM), or any combination of these or other storage media or signal bearing medium, or transmitted via a network such as a wireless network, Ethernet, the internet, or any other combination of these or other networks. In other words, in examples, a computer program may comprise computer readable instructions which, when implemented on a computer, cause the computer to carry out a method according examples of the disclosure. In examples, a storage medium may comprise the computer program, for example, as mentioned above. It will also be appreciated that other suitable computer architectures could be used such as those based on one or more parallel processors.

Although a variety of examples have been described herein, these are provided by way of example only and many variations and modifications on such examples will be apparent to the skilled person and fall within the spirit and scope of the present invention, which is defined by the appended claims and their equivalents.

## Claims

1. An enterprise resource planning system, comprising:
an enterprise resource planning (ERP) server operable to implement an enterprise resource planning application configured to be able to process planned data that is input by one or more users via a respective user device of a plurality of user devices, the planned data relating to a plurality of events associated with delivery of a plurality of items within an item distribution network;
a plurality of marker generation devices, each marker generation device being operable to generate a plurality of markers that are each associated with a respective item for tracking delivery of that item within the item distribution network, in which each marker comprises respective identification data relating to one or more attributes of the item with which is it associated;
a data collection server operable to communicate with the ERP server via a network;
a plurality of marker readers located at respective item reading locations, the plurality of marker readers each being operable to read the identification data from the markers and send the identification data together with respective measured attribute data to the data collection server via the network; and
in which:
the ERP server is operable to receive actual event data, the actual event data comprising the identification data and respective measured attribute data generated by the plurality of marker readers; and
the ERP server is operable to generate analytic data for analysis based on the planned data and the actual event data.

2. A system according to claim 1, in which the actual event data comprises user entered event data.

3. A system according to claim 1 or claim 2, in which the plurality of marker readers comprise:
a plurality of first marker readers located at respective item source locations within the item distribution network, the first marker readers being operable to read the identification data from the marker and send the identification data together with respective first measured attribute data to the data collection server via the network; and
a plurality of second marker readers located at respective item destination locations within the item distribution network, the second marker reader being operable to read the identification data from the marker and send the identification data together with respective second measured attribute data to the data collection server via the network:

4. A system according to claim 3, in which the plurality of marker readers comprise:
a plurality of intermediate location readers located at respective intermediate locations within the item distribution network between the item source locations and the item destination locations, the intermediate location readers being operable to read the identification data from the marker and send the identification data together with respective third measured attribute data to the data collection server via the network.

5. A system according to claim 3 or claim 4, in which the ERP server is operable to receive at least some of the actual event data via the data collection server, and the actual event data comprises one or more of:
the identification data and first measured attribute data read by the first marker reader;
the identification data and second measured attribute data read by the second marker reader; and
the identification data and third measured attribute data read by the intermediate location readers.

6. A system according to any preceding claim, in which the ERP server is operable to communicate with the marker generation device so as to generate the marker.

7. A system according to any preceding claim, in which the ERP server is operable to generate forecast data based on the planned data and the actual event data.

8. A system according to claim 7, in which the ERP server is operable to update the forecast data based on the analytic data.

9. A system according to any preceding claim, in which the ERP server is operable to communicate with the plurality of user devices via the network.

10. A system according to claim 9, in which the ERP server is operable to send the analytic data to one or more of the plurality of the user devices.

11. A system according to any preceding claim, in which each marker comprises one or more of: a radio frequency identification (RFID) device; a near field communication (NFC) device; a bar code; a quick response (QR) code; a magnetic stripe; and alphanumeric characters, for recording the identification data.

12. A system according to any preceding claim, in which the measured attribute data comprises one or more of: timestamp data indicative of a time and/or date that the marker was read; data identifying identity of the reader; and all or part of identification data generated by the source marker generation device.

13. A system according to any preceding claim, in which the ERP server is operable to generate a project plan based on past data associated with events that have already happened and the planned data, and update the project plan based on the actual event data.

14. A system according to any preceding claim, in which the enterprise resource planning application is a Gantt Chart application.

15. A system according to any preceding claim, in which the plurality of marker readers are operable to cache locally the identification data and the measured attribute data so as to generate cached marker data.

16. An enterprise resource planning method, comprising:
implementing, on an enterprise resource planning (ERP) server, an enterprise resource planning application configured to process planned data that is input by one or more users via a respective user device of a plurality of user devices, the planned data relating to a plurality of events associated with delivery of a plurality of items within an item distribution network;
generating, by a plurality of marker generation devices, a plurality of markers that are each associated with a respective item for tracking delivery of that item within the item distribution network, in which each marker comprises respective identification data relating to one or more attributes of the item with which is it associated;
communicating, by a data collection server, with the ERP server via a network;
reading, by a plurality of marker readers located at respective item reading locations, the identification data from the markers and sending the identification data together with respective measured attribute data to the data collection server via the network; and
receiving, by the ERP server, actual event data, the actual event data comprising the identification data and the respective measured attribute data generated by the plurality marker readers; and
generating, by the ERP server, analytic data for analysis based on the planned data and the actual event data.

17. An enterprise resource planning system, comprising:
an enterprise resource planning (ERP) server operable to implement an enterprise resource planning application configured to be able to process planned data that is input by a user via a user device, the planned data relating to one or more planned events associated with delivery of an item;
a marker generation device located at an item source location, the marker generation device being operable to generate a marker that is associated with the item for tracking delivery of the item from the item source location to an item destination location, in which the marker comprises identification data relating to one or more attributes of the item;
a data collection server operable to communicate with the ERP server via a network;
a first marker reader located at the item source location, the first marker reader being operable to read the identification data from the marker and send the identification data together with first measured attribute data to the data collection server via the network; and
a second marker reader located at the item destination location, the second marker reader being operable to read the identification data from the marker and send the identification data together with second measured attribute data to the data collection server via the network;
in which:
the ERP server is operable to receive actual event data, the actual event data comprising at least one of: the identification data and first measured attribute data read by the first marker reader; and the identification data and second measured attribute data read by the second marker reader;
the ERP server is operable to generate analytic data for analysis based on the planned data and the actual event data.

18. A system according to claim 17, comprising:
a third marker reader located at an intermediate location between the item source location and the item destination location, the third marker reader being operable to read the identification data from the marker and send the identification data together with third measured attribute data to the data collection server via the network, in which:
the actual event data comprises the identification data and third measured attribute data read by the third marker reader.
